# EUROPEAN PATENT APPLICATION

(11) **EP 4 675 747 A1**
(43) Date of publication of application: **07.01.2026**
(21) Application number: 24763523.8
(22) Date of filing: 05.02.2024
(51) Int. Cl.: H01M 10/0587, H01M 4/13, H01M 4/38, H01M 10/04, H01M 10/052, H01M 50/531

(54) **CYLINDRICAL BATTERY**

(30) Priority: 27.02.2023 JP 2023028182
(71) Applicant: Panasonic Energy Co., Ltd., Osaka 570-8511 (JP)
(72) Inventor: KATO, Genichiro, Kadoma-shi, Osaka 571-0057 (JP); IMANISHI, Yosuke, Kadoma-shi, Osaka 571-0057 (JP)
(74) Representative: Eisenführ Speiser
(86) International application number: PCT/JP2024/003621
(87) International publication number: WO 2024/181039

(57) **Abstract**

This cylindrical battery comprises: an electrode body in which a long positive electrode, which has a positive electrode core body and a positive electrode mixture layer, and a long negative electrode (12), which has a negative electrode core body (12a) and a negative electrode mixture layer (12b), are wound with a separator therebetween; a bottomed tubular exterior can that houses the electrode body; and a sealing body that seals an opening in the exterior can. In a case where the number of windings of the negative electrode (12) is counted from the side where the winding starts on the basis of a range, of the negative electrode (12), opposing the positive electrode via the separator, the negative electrode (12) is wound ten or more times, and in the negative electrode mixture layer (12b), a first mixture layer region (15a), which is located in a winding 25% to 35% through the total number of windings of the negative electrode (12), has a low-density region (14b), in the negative electrode mixture layer (12b), which has a lower density than a second mixture layer region (15b) located on the outside of the first mixture layer region.

## Description

### TECHNICAL FIELD

The present disclosure relates to a cylindrical battery.

### BACKGROUND ART

Conventionally, there is a cylindrical battery described in Patent Literature 1. This cylindrical battery comprises: an electrode assembly; a bottomed cylindrical exterior can that accommodates the electrode assembly; a sealing assembly that blocks an opening portion of the exterior can; and a gasket clamped by the exterior can and the sealing assembly. The electrode assembly has a structure where a positive electrode and a negative electrode are wound with a separator intervening therebetween. The positive electrode and the sealing assembly are electrically connected to each other via a positive electrode lead, and the negative electrode and a bottom portion of the exterior can are electrically connected to each other via a negative electrode lead.

### CITATION LIST

### PATENT LITERATURE

PATENT LITERATURE 1: Japanese Unexamined Patent Application Publication No. Hei 09-274923

### SUMMARY

The inventors of the present application have found a phenomenon that due to the expansion and contraction of the negative electrode, the surface pressure locally increases in a wound-type electrode assembly. If the surface pressure locally increases in the electrode assembly, the electrode reaction and the electrolyte distribution tend to be uneven, which possibly affects the battery characteristics. Accordingly, the present disclosure has an advantage to provide a cylindrical battery that may prevent the surface pressure from locally increasing in the wound-type electrode assembly, and has favorable battery characteristics.

To solve the above problem, a cylindrical battery according to the present disclosure comprises: an electrode assembly that includes: an elongated positive electrode that includes a positive electrode core and a positive electrode mixture layer; and an elongated negative electrode that includes a negative electrode core and a negative electrode mixture layer, the electrodes being wound with a separator intervening therebetween; a bottomed cylindrical exterior can that accommodates the electrode assembly; and a sealing assembly that blocks an opening portion of the exterior can, wherein when the number of turns of the negative electrode is counted from a winding start side based on a range of the negative electrode that faces the positive electrode via the separator, the negative electrode is wound ten times or more, and a first mixture layer area that is in the negative electrode mixture layer and is positioned at a turn of 25% to 35% of a total number of turns of the negative electrode includes a low-density area having a lower density than a second mixture layer area that is in the negative electrode mixture layer and is positioned at another turn.

According to the cylindrical battery in the present disclosure, the surface pressure may be prevented from locally increasing in the wound-type electrode assembly, and favorable battery characteristics may be achieved.

### BRIEF DESCRIPTION OF DRAWING

FIG. 1 is a sectional view of a cylindrical battery in the axial direction according to one embodiment of the present disclosure.
FIG. 2 is a schematic diagram showing a section of a longitudinally developed negative electrode including the thickness direction and the longitudinal direction, and the relationship between the longitudinal direction position of negative electrode mixture layers and the density of the negative electrode mixture layers.
FIG. 3 is a graph showing measurement results of positive electrode thickness measurement tests.

### DESCRIPTION OF EMBODIMENTS

Referring to the drawings, an embodiment of a cylindrical battery according to the present disclosure is described below in detail. Note that the cylindrical battery in the present disclosure may be a primary battery or a secondary battery. It may be a battery that uses aqueous electrolyte, or a battery that uses non-aqueous electrolyte. In the following, a non-aqueous electrolyte secondary battery (lithium-ion battery) that uses non-aqueous electrolyte is described below as a cylindrical battery 10 that is an embodiment. However, the cylindrical battery in the present disclosure is not limited to this. The electrolyte may be aqueous electrolyte.

It is originally assumed that the characteristic portions of the embodiment and modified examples described below are combined as appropriate, and a new embodiment is constructed. In the following embodiment, the same configuration is assigned the same symbol in the diagram, and redundant description is omitted. The plurality of drawings include schematic diagrams. Among different diagrams, the ratios of longitudinal, lateral, and height dimensions and the like of the members do not necessarily match. In the present Description, the sense of the axial direction (height direction) of the cylindrical battery 10 where the sealing assembly 17 is present is defined as "upper", and the sense of the axial direction where the bottom portion 31 is present is defined as "lower". Among the configuration elements described below, configuration elements that are not described in an independent claim representing the highest-level concept are arbitrary configuration elements, and are not necessary configuration elements.

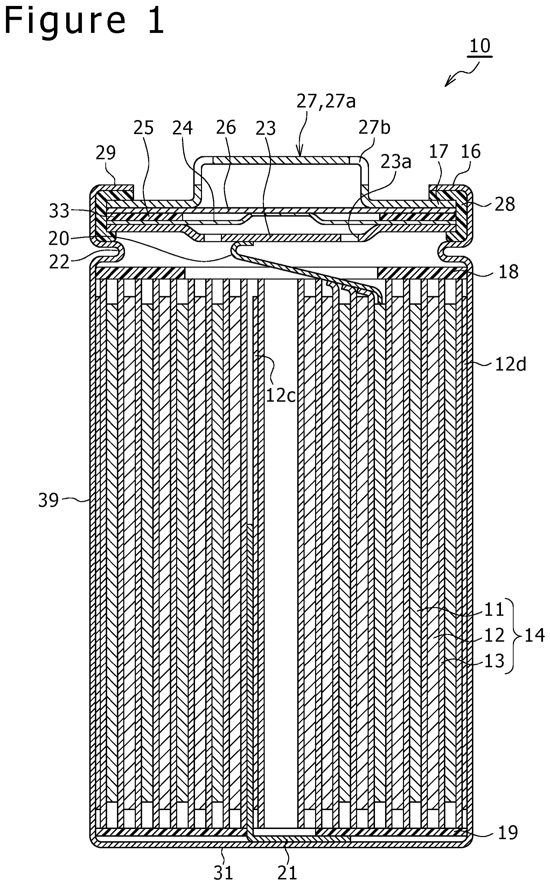

FIG. 1 is a sectional view of a cylindrical battery 10 in the axial direction according to one embodiment of the present disclosure. As shown in FIG. 1, the cylindrical battery 10 includes: an electrode assembly 14; a bottomed cylindrical exterior can 16 that accommodates the electrode assembly 14; and a sealing assembly 17 that blocks an opening portion of the exterior can 16. The exterior can 16 houses non-aqueous electrolyte along with the electrode assembly 14. The exterior can 16 includes, at its upper end portion, a shoulder portion 29 that is bent inward in the radial direction and extends inward. The exterior can 16 includes a grooved portion 22 formed in a side wall, and the sealing assembly 17 is supported by the grooved portion 22 and blocks an opening portion of the exterior can 16.

The cylindrical battery 10 further comprises a gasket 28 that intervenes between the exterior can 16 and the sealing assembly 17. The gasket 28 is a ring-shaped plastic member attached to an outer peripheral portion of the sealing assembly 17, and insulates the sealing assembly 17 from the exterior can 16. The gasket 28 blocks the gap between the exterior can 16 and the sealing assembly 17, and seals the inside of the battery. The gasket 28 is made of, for example, polyolefin.

The non-aqueous electrolyte contains a non-aqueous solvent, and electrolyte salt dissolved in the non-aqueous solvent. The non-aqueous solvent may be, for example, any of esters, ethers, nitriles, or amides, a mixed solvent of two or more of them, or the like. The non-aqueous solvent may contain a halogenated compound made by replacing at least some of hydrogen atoms of the solvent with halogen atoms, such as fluorine. Examples of the non-aqueous solvent include ethylene carbonate (EC), ethyl methyl carbonate (EMC), dimethyl carbonate (DMC), a mixed solvent of them and the like. The electrolyte salt may be, for example, lithium salt, such as LiPF₆. Note that the non-aqueous electrolyte is not limited to liquid electrolyte, and may be solid electrolyte instead.

The electrode assembly 14 has a wound structure which includes a positive electrode 11, a negative electrode 12, and a separator 13, and in which the positive electrode 11 and the negative electrode 12 are spirally wound with the separator 13 intervening therebetween. Each of the positive electrode 11 and the negative electrode 12 is wound ten times of more; for example, the number of turns is greater than or equal to 18 and less than or equal to 30. More specifically, when the number of turns of the negative electrode 12 is counted from the winding start side based on a range of the negative electrode 12 that faces the positive electrode 11 via the separator 13, the negative electrode is wound ten times or more; for example, the number of turns is greater than or equal to 18 and less than or equal to 30. The negative electrode 12 is formed to have a dimension one size larger than the positive electrode 11 in order to prevent lithium from depositing. That is, the negative electrode 12 is formed to be longer in the longitudinal direction and the width direction than the positive electrode 11. The separator 13 is formed to have a dimension at least one size larger than the positive electrode 11. For example, two separators 13 are disposed so as to sandwich the positive electrode 11.

A positive electrode lead 20 and a negative electrode lead 21 are connected to the electrode assembly 14. The positive electrode lead 20 electrically connects the positive electrode 11 and the sealing assembly 17 to each other. The negative electrode lead 21 electrically connects the negative electrode 12 and the bottom portion 31 of the exterior can 16 to each other. In the example shown in FIG. 1, the positive electrode lead 20 extends toward the sealing assembly 17 through the opening portion of the ring-shaped upper insulating plate 18, and the negative electrode lead 21 extends from the winding-start-side end portion of the negative electrode 12, and extends toward the bottom portion 31 of the exterior can 16 through a through-hole provided at a center of the ring-shaped lower insulating plate 19.

The positive electrode 11 has an elongated shape, and includes a positive electrode core, and positive electrode mixture layers formed on the opposite surfaces of the positive electrode core. The positive electrode core may be made of metal foil that is stable in the potential range of the positive electrode 11, such as of aluminum or an aluminum alloy, a film on which the metal is disposed as the surface layer, or the like. The positive electrode mixture layer contains a positive-electrode active material, a conductive agent such as acetylenLiPF6e black, and a binding agent such as polyvinylidene fluoride (PVdF). The positive-electrode active material is configured to contain a lithium-containing metal composite oxide as a principal component. The metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, W, etc. A preferable example of the lithium-containing metal composite oxide is a composite oxide containing at least one of Ni, Co, Mn, and Al. Preferably, while the positive electrode lead 20 is connected to the positive electrode 11, the positive electrode lead 20 is directly joined to the positive electrode core by ultrasonic welding or the like.

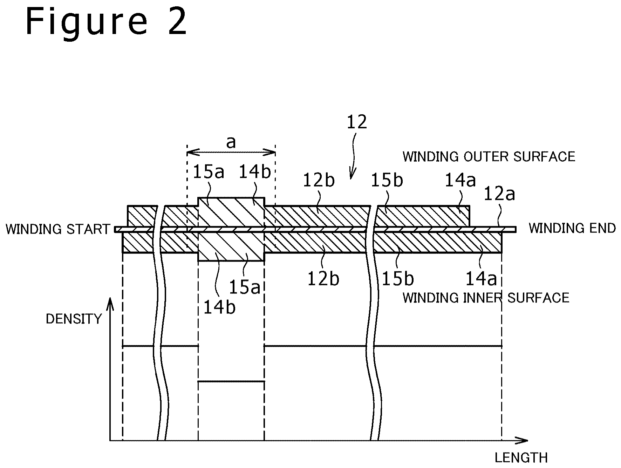

FIG. 2 is a schematic diagram showing a section of the longitudinally developed negative electrode 12 including the thickness direction and the longitudinal direction, and the relationship between the longitudinal direction position of negative electrode mixture layers 12b and the density of the negative electrode mixture layers 12b. As shown in FIG. 2, the negative electrode 12 includes: a negative electrode core 12a; and the negative electrode mixture layers 12b formed on the opposite surfaces of the negative electrode core 12a. Metal foil, such as of copper or copper alloy, which is stable in the potential range of the negative electrode 12, film having a surface on which such metal is disposed, or the like can be used as the negative electrode core 12a. The negative electrode mixture layer 12b contains a negative-electrode active material, and a binding agent, such as styrenebutadiene rubber (SBR) or PVdF. Typically, a carbon material that reversibly intercalates and deintercalates lithium ions is used as the negative-electrode active material. Preferable carbon materials are graphite, such as natural graphite such as flake graphite, vein graphite, and amorphous graphite, and artificial graphite such as vein artificial graphite, and graphitized mesophase carbon microbeads. The negative electrode mixture layer 12b may contain a silicon material containing silicon (Si) as a negative-electrode active material. A lithium-alloying metal other than silicon, an alloy containing this metal, a compound containing this metal or the like may be used as the negative-electrode active material. Preferably, the negative electrode lead 21 is directly joined to the negative electrode core 12a by ultrasonic welding or the like.

The exterior can 16 is typically made of metal, with iron as the principal component, for example, a material made by plating iron with nickel, but may be made of metal, with aluminum or the like as the principal component, instead. The exterior can 16 includes the cylindrical portion 39 and the bottom portion 31. The cylindrical portion 39 includes the ring-shaped grooved portion 22 and the ring-shaped shoulder portion 29. The grooved portion 22 is formed by depressing part of the cylindrical portion 39 inward in the radial direction by a spinning process. The shoulder portion 29 is formed when an upper end portion (an end portion on one side in the axial direction) of the cylindrical portion 39 is bent inward in the radial direction and swagged to a peripheral edge portion 33 of the sealing assembly 17, and extends inward in the radial direction at the upper end portion of the cylindrical portion 39.

The sealing assembly 17 is clamped by the shoulder portion 29 and the grooved portion 22 via the gasket 28 by swagging, thus being fixed to the exterior can 16. During swaging, the gasket 28 is compressed by the exterior can 16 and the sealing assembly 17. The grooved portion 22 is formed at a position apart from the upper end of the exterior can 16 by a predetermined length. The predetermined length is, for example, a length corresponding to what is greater than or equal to 1% and less than or equal to 20% of the length of the exterior can 16 in the axial direction.

The sealing assembly 17 has a structure that includes a terminal plate 23, a lower vent member 24, an insulating plate 25, an upper vent member 26, and a sealing plate 27 stacked in this order from the electrode assembly 14 side. The members constituting the sealing assembly 17 each have, for example, a disk shape or a ring shape. Each of the members except the insulating plate 25 are electrically connected to each other. The sealing plate 27 has a convex shape where a center portion in the radial direction protrudes outward. A projection 27a of the sealing plate 27 includes a cylinder portion, and a flat top surface portion surrounded by the cylinder portion. One or more vent holes 27b are formed in the projection 27a.

The lower vent member 24, the insulating plate 25, and the upper vent member 26 constitute a current blocking mechanism. The lower vent member 24 and the upper vent member 26 are connected to each other at their center portions, and the insulating plate 25 intervenes between their peripheral edge portions. Possible increase in the internal pressure due to occurrence of an abnormality in the cylindrical battery 10 causes the lower vent member 24 to be deformed to push up the upper vent member 26 toward the sealing plate 27 and is broken, thereby breaking the current path between the lower vent member 24 and the upper vent member 26. Further increase in the internal pressure breaks the upper vent member 26, and gas is exhausted through the vent holes 27b of the sealing plate 27.

In the present embodiment, the positive electrode lead 20 is connected to the lower surface of the terminal plate 23 by welding, ultrasonic welding or the like, and the sealing plate 27 that is a top plate of the sealing assembly 17 and is electrically connected to the terminal plate 23 serves as a positive electrode terminal. The negative electrode lead 21 is connected to a bottom portion 31 inner surface of the exterior can 16 by welding, ultrasonic welding or the like, and the exterior can 16 serves as a negative electrode terminal.

The negative electrode 12 includes a core exposed portion 12c where the negative electrode core 12a is exposed at a winding-start-side end portion. The negative electrode lead 21 is joined to the core exposed portion 12c. The electrode assembly 14 includes a core exposed portion 12d where the negative electrode core 12a is exposed, at the outermost-peripheral surface. The core exposed portion 12d is in contact with the inner-peripheral surface of the exterior can 16. In the present embodiment, both the winding-start-side end portion of the negative electrode 12 and the winding-end-side end portion of the negative electrode 12 are electrically connected to the exterior can 16 that constitutes a negative electrode terminal. Thus, the current collection path is reduced, which reduces the electrical resistance of the cylindrical battery 10. Note that the negative electrode lead may be joined to the winding-end-side end portion of the negative electrode instead of the winding-start-side end portion or in addition to this end portion. The separator may be disposed on the outermost turn of the electrode assembly.

The relationship between the winding position of the negative electrode mixture layer 12b and its density is described below. In FIG. 2, a range indicated by an arrow a in the winding direction (longitudinal direction) of the negative electrode 12 is a range positioned at a turn of 25% to 35% of the total number of turns of the negative electrode 12. The number of turns of the negative electrode 12 is counted from the winding start side based on the range of the negative electrode 12 that faces the positive electrode 11 via the separator 13. In FIG. 2, a first hatched area indicated by hatching with closely spaced diagonal lines is a high-density area 14a where the density of the negative electrode mixture layer 12b is high, and a second hatched area indicated by hatching with widely spaced diagonal lines is a low-density area 14b where the density of the negative electrode mixture layer 12b is lower than that of the high-density area 14a.

As shown in FIG. 2, the first mixture layer area 15a positioned at a turn of 25% to 35% of the total number of turns of the negative electrode 12 in the negative electrode mixture layer 12b includes the low-density area 14b, and the second mixture layer area 15b positioned at another turn in the negative electrode mixture layer 12b consists of the high-density area 14a. In other words, the first mixture layer area 15a positioned at a turn of 25% to 35% of the total number of turns of the negative electrode 12 in the negative electrode mixture layer 12b includes the low-density area 14b that is positioned at another turn of the negative electrode mixture layer 12b and has a smaller density than the second mixture layer area 15b.

The second mixture layer area 15b may consist of the high-density area 14a, and at least part of the first mixture layer area 15a may consist of the low-density area 14b. In the example shown in FIG. 2, part of the first mixture layer area 15a is made up of the low-density area 14b. Alternatively, the entire first mixture layer area 15a may be made up of the low-density area 14b. Although described later, preferably, the density of the low-density area 14b is greater than or equal to 90% and less than or equal to 98% of the density of the high-density area 14a.

A negative-electrode mixture slurry that contains the negative-electrode active material, a binding agent and the like is applied onto the negative electrode core 12a, and the coated film is then dried. Subsequently, by compressing the coated film such that the compressibility of the low-density area 14b can be lower than the compressibility of the high-density area 14a, the negative electrode 12 shown in FIG. 2 is fabricated.

### [Measurement of Positive Electrode Thickness]

### <Example>

A negative-electrode mixture slurry containing a negative-electrode active material, a binding agent and the like was applied onto a negative electrode core, the coated film was then dried, and subsequently, the coated film was compressed so as to make the compressibility of the low-density area lower than the compressibility of the high-density area, thus fabricating a negative electrode. The density of the low-density area was 95% of the density of the high-density area. With the definition of the number of turns of the negative electrode as described above, the low-density area was positioned at a turn of 25% to 35% of the total number of turns of the negative electrode between the winding outer surface and the winding inner surface of the negative electrode. The fabricated negative electrode was used, and the cylindrical battery described with reference to FIGS. 1 and 2 was fabricated.

### <Comparative Example>

A cylindrical battery only different in that the density of the negative electrode mixture layer was constant irrespective of the longitudinal-direction position of the negative electrode in comparison with Example was fabricated. The density of the negative electrode mixture layer was the same as the density of the high-density area of the cylindrical battery in Example.

### (Measurement Method)

Each fabricated battery was charged in an environment at 45°C with constant current of 0.3 C until the voltage became 4.2 V, and then was charged with a constant voltage of 4.2 V until the current became 0.02 C. Subsequently, discharge was performed with a constant current of 0.5 C until the voltage reached 2.5 V. The charge and discharge were assumed as one cycle, and the charge and discharge were repeated for 500 cycles. Subsequently, based on CT (computed tomography) images of an electrode assembly section of each battery, the positive electrode thickness with respect to the number of turns was measured.

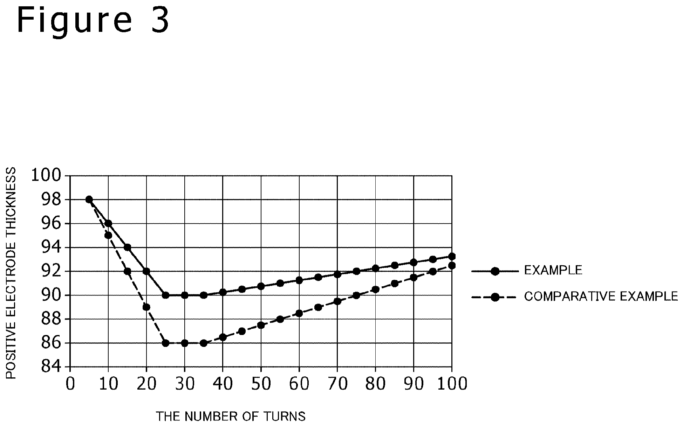

FIG. 3 is a graph showing positive electrode thickness measurement results. In FIG. 3, the ordinate axis indicates the relative value of the thickness of the positive electrode after the cycles assuming that the positive electrode thickness before winding is 100, and the abscissa axis indicates the relative value of the number of turns of the positive electrode assuming that the total number of turns of the positive electrode is 100.

As shown in FIG. 3, in the battery in the comparative example where the density of the negative electrode mixture layer was constant, the positive electrode thickness decreased at turns from 25% to 35% of the total number of turns of the positive electrode, and the positive electrode was subjected to a high pressure in an area of the turns from 25% to 35% of the total number of turns. If the positive electrode thickness becomes locally thin, and the distance between the plates becomes locally short as in the battery in the comparative example, the electrode reaction and the electrolyte distribution tend to be uneven, which possibly affects the battery characteristics.

Unlike this, according to the battery in Example, in comparison with the battery in the comparative example, the amount of reduction in the positive electrode thickness was small at turns from 25% to 35% of the total number of turns of the positive electrode, the reduction in the positive electrode thickness in the longitudinal direction of the positive electrode was alleviated, and the positive electrode thickness was even in the longitudinal direction. Consequently, according to the battery in Example, it can be verified that the surface pressure was prevented from locally increasing in the electrode assembly. Therefore, according to the battery in Example, favorable battery characteristics were successfully achieved.

Note that if the negative electrode mixture layer 12b includes a silicon material, the change in the volume of the negative electrode 12 due to expansion and contraction is large. Consequently, the effect of alleviating local increase in surface pressure in the electrode assembly 14, or a working effect of the cylindrical battery 10 in the present disclosure, is significant. If the negative electrode lead 21 is joined to the winding-start-side end portion, the winding-start-side end portion of the negative electrode 12 is fixed to the exterior can 16 via the negative electrode lead 21. Accordingly, the winding direction position on the winding start side of the negative electrode 12 becomes less likely to vary. Consequently, the local surface pressure due to expansion and contraction of the negative electrode 12 in the electrode assembly 14 tends to increase. Consequently, also in the case where the negative electrode lead 21 is joined to the winding-start-side end portion of the negative electrode 12, the working effect of the present invention is significant.

In the embodiment described above, the mass per unit area of the negative electrode mixture layer 12b in the low-density area 14b is the same as the mass per unit area of the negative electrode mixture layer 12b in the other areas. Consequently, as shown in FIG. 2, the thickness of the low-density area 14b is greater than the thickness of the high-density area 14a. Accordingly, the external diameter of the electrode assembly 14 is large. If the density in the low-density area 14b is greater than or equal to 90% and less than or equal to 98% of the density in the high-density area 14a, the external diameter of the electrode assembly 14 can be effectively prevented from increasing. Consequently, the electrode assembly 14 can be easily and smoothly inserted into the exterior can 16.

Note that the present disclosure is not limited to the aforementioned embodiment and its modified examples, and various improvements and changes can be made in a range of the items described in the claims of the present application and their equivalent range.

For example, in the aforementioned embodiment, the case is described where by changing the compressibility in compression, the density of the negative electrode mixture layer changes. Alternatively, reduction in the amount of negative-electrode mixture slurry to be applied to the negative electrode core in at least part of turns of 25% to 35% of the total number of turns of the negative electrode may allow the first mixture layer area in the negative electrode mixture layer that is positioned at a turn of 25% to 35% of the total number of turns of the negative electrode to include the low-density area having a lower density than the second mixture layer area in the negative electrode mixture layer that is positioned at other turns. In this case, the thickness of the low-density area 14b may be the same as the thickness of the high-density area 14b.

### REFERENCE SIGNS LIST

10 Cylindrical battery, 11 Positive electrode, 12 Negative electrode, 12a Negative electrode core, 12b Negative electrode mixture layer, 12c, 12d Core exposed portion, 13 Separator, 14 Electrode assembly, 14a High-density area, 14b Low-density area, 15a First mixture layer area, 15b Second mixture layer area, 16 Exterior can, 17 Sealing assembly, 18 Upper insulating plate, 19 Lower insulating plate, 20 Positive electrode lead, 21 Negative electrode lead, 22 Grooved portion, 23 Terminal plate, 24 Lower vent member, 25 Insulating plate, 26 Upper vent member, 27 Sealing plate, 27a Projection, 27b Vent hole, 28 Gasket, 29 Shoulder portion, 31 Bottom portion, 33 Peripheral edge portion, 39 Cylindrical portion.

## Claims

1. A cylindrical battery, comprising:
an electrode assembly that includes: an elongated positive electrode that includes a positive electrode core and a positive electrode mixture layer; and an elongated negative electrode that includes a negative electrode core and a negative electrode mixture layer, the electrodes being wound with a separator intervening therebetween;
a bottomed cylindrical exterior can that accommodates the electrode assembly; and
a sealing assembly that blocks an opening portion of the exterior can, wherein
when the number of turns of the negative electrode is counted from a winding start side based on a range of the negative electrode that faces the positive electrode via the separator, the negative electrode is wound ten times or more, and a first mixture layer area that is in the negative electrode mixture layer and is positioned at a turn of 25% to 35% of a total number of turns of the negative electrode includes a low-density area having a lower density than a second mixture layer area that is in the negative electrode mixture layer and is positioned at another turn.

2. The cylindrical battery according to claim 1, wherein the density of the low-density area is greater than or equal to 90% and less than or equal to 98% of a density of the second mixture layer area.

3. The cylindrical battery according to claim 1 or 2, wherein the negative electrode mixture layer contains a silicon material.

4. The cylindrical battery according to claim 1 or 2, wherein
the negative electrode includes a negative electrode core exposed portion where the negative electrode core is exposed at a winding-start-side end portion, and
a negative electrode lead is joined to the negative electrode core exposed portion.
